(19) Europäisches Patentamt

European Patent Office

Office européen des brevets

(11) **EP 3 020 277 B1**

(12) # EUROPÄISCHE PATENTSCHRIFT

(45) Veröffentlichungstag und Bekanntmachung des Hinweises auf die Patenterteilung:
**07.03.2018 Patentblatt 2018/10**

(21) Anmeldenummer: **14192832.5**

(22) Anmeldetag: **12.11.2014**

(51) Int Cl.:
*A01N 25/10* (2006.01)  *A01N 25/28* (2006.01)
*A01N 59/16* (2006.01)  *A01N 59/20* (2006.01)
*A01N 25/34* (2006.01)  *C09D 5/14* (2006.01)
*C09D 5/16* (2006.01)  *C09D 123/04* (2006.01)
*C09C 3/06* (2006.01)  *C09C 1/00* (2006.01)
*C08K 3/00* (2018.01)  *C09D 177/02* (2006.01)
*C09D 177/06* (2006.01)  *C08K 9/02* (2006.01)
*C08K 3/22* (2006.01)

(54) **Zusammensetzung mit gesteuerter Freisetzung von bioziden Metallionen**

Composition with controlled release of biocidal metal ions

Composition de libération commandée d'ions métalliques biocides

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.05.2016 Patentblatt 2016/20**

(73) Patentinhaber: **Evonik Degussa GmbH**
**45128 Essen (DE)**

(72) Erfinder:
• **Leick, Sabine**
**63486 Bruchköbel (DE)**
• **Berger, Jan**
**44141 Dortmund (DE)**

• **Hartmann, Markus**
**48324 Sendenhorst (DE)**
• **Tschernjaew, Juri**
**63743 Aschaffenburg (DE)**
• **Kern, Magdalena**
**63755 Alzenau (DE)**
• **Mertsch, Rüdiger**
**65189 Wiesbaden (DE)**
• **Michael, Günther**
**63791 Karlstein (DE)**

(56) Entgegenhaltungen:
**WO-A1-2013/036746 WO-A1-2014/187769**
**US-A1- 2004 197 564**

**Beschreibung**

Die Erfindung betrifft eine thermoplastische Zusammensetzung, die ein mit Siliciumdioxid umhülltes, biozides Metalloxid enthält, damit beschichtete Substrate sowie deren Herstellung.

Biozide Zusammensetzungen und insbesondere bewuchshemmende Beschichtungen, die Metalloxide enthalten, sind bekannt. In der US 2005/0048218 A1 wird beschrieben, dass ein PA12-Rundkornpulver, das mit Kupfer überzogen ist, mittels eines Pulversprühverfahrens als Antifoulingbeschichtung aufgebracht wird. Die Verwendung von metallischem Kupfer und anderen Metallen als Antifoulingmittel ist jedoch mit anwendungstechnischen Nachteilen verbunden, weshalb die Verwendung von Metalloxiden vorzuziehen ist. So sind aus der US 2009/0022899 A1 bewuchshemmende Beschichtungen für Schiffe aus Polyamid und Kupfer-(I)-oxid bekannt, die durch Plasmasprühen aufgebracht werden. Ähnlich offenbart die WO 2008/033364 A1 pulverförmige bewuchshemmende Beschichtungsmaterialien, die Polyethylen oder Polyamid sowie Kupfer-(I)-oxid enthalten und durch thermisches Aufsprühen aufgebracht werden.

Das Problem dieser bewuchshemmenden Beschichtungen ist ein nur kurzzeitig anhaltender Antifoulingeffekt, da aus thermoplastischen Polymermassen mit geringer Wasseraufnahmekapazität (etwa 0 - 5 %) lediglich die Metalloxide aus der Oberflächenschicht in die aquatische Umgebung abgegeben werden. Die diffusive Freisetzung von wasserlöslichen Bioziden, insbesondere Kupferionen, aus tieferen Bulkschichten findet nur in äußerst geringem Maße statt, wodurch die benötigte Wirksamkeitskonzentration für einen effektiven Schutz nicht mehr erreicht werden kann.

In Lacksystemen liegt hingegen das Hauptproblem bei der Verwendung von Metalloxiden in deren zu schneller, aber exponentiell sinkender Freisetzung. Dies bedingt einen hohen notwendigen Anteil an Metalloxiden in der Beschichtung, wenn man von einer biologisch wirksamen Biozid-Konzentration über den Zeitraum der Lebensdauer der Beschichtung ausgeht. Zur Lösung dieser Problematik wird beispielsweise in der US 2004/197564 A1 vorgeschlagen, durch eine Umhüllung von Kupfer mit einem Siliciumdioxidfilm und Dispergierung derartiger Partikel in ein filmbildendes Harz-Härter-System eine verminderte Freisetzung zu erreichen. In der WO 2013/036746 A1 werden antimikrobielle Beschichtungen beschrieben, die Kupferpartikel enthalten, die mit einer sehr dünnen Schicht aus Siliciumdioxid überzogen sind.

Die technische Aufgabe dieser Erfindung war daher, ein bewuchshemmendes thermoplastisches Material mit ausreichend hoher Freisetzung der darin enthaltenen bioziden Substanz bereitzustellen, bei dem die Freisetzung des bewuchshemmenden Metalloxids gezielt einstell- und steuerbar ist und daher eine kontrollierte Freisetzung dieser bioziden Substanz über einen längeren Zeitraum erreicht wird. Technische Aufgabe war weiterhin, ein Verfahren zur Herstellung dieses Materials bereitzustellen.

Gegenstand der Erfindung ist eine thermoplastische Zusammensetzung, die folgende Komponenten enthält:

I. 40 bis 95 Gew.-%, bevorzugt 50 bis 92 Gew.-% und besonders bevorzugt 55 bis 88 Gew.-% eines thermoplastischen Polymers, ausgewählt aus der Gruppe bestehend aus Polyamid, Polyolefin, Fluorpolymer und thermoplastischem Elastomer,

II. 5 bis 60 Gew.-%, bevorzugt 8 bis 50 Gew.-% und besonders bevorzugt 12 bis 45 Gew.-% Kern-Hülle-Partikel, deren Hülle im Wesentlichen aus partikulärem Siliciumdioxid mit einer Dicke von 0,2 bis 10 $\mu$m, bevorzugt 0,2 bis 8 $\mu$m und besonders bevorzugt 0,5 bis 5 $\mu$m besteht und deren Kern im Wesentlichen aus wenigstens einem bewuchshemmenden Metalloxid besteht, welches in sphärischer und/oder sphäroider Form mit einem zahlenmittleren Partikeldurchmesser von 1 bis 20 $\mu$m, bevorzugt 2 bis 10 $\mu$m und besonders bevorzugt 3 bis 7 $\mu$m vorliegt, sowie

III. 0 bis 30 Gew.-%, vorzugsweise 0,1 bis 20 Gew.-% und besonders bevorzugt 1 bis 15 Gew.-% üblicherweise verwendete Zusatzstoffe,

wobei sich die Prozentangaben auf die gesamte Zusammensetzung beziehen und in der Summe 100 ergeben.

"Im Wesentlichen" soll bedeuten, dass bei den Kern-Hülle-Partikeln der Anteil von Siliciumdioxid in der Hülle und der Anteil an bewuchshemmendem Metalloxid im Kern jeweils wenigstens 98 Gew.-% und in der Regel wenigstens 99,5 Gew.-% beträgt.

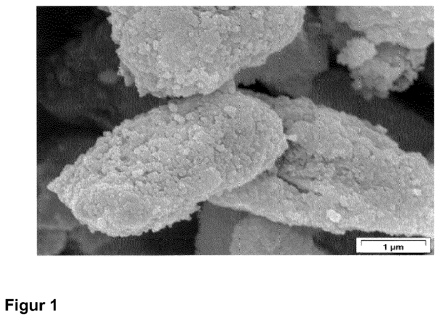

"Partikuläres Siliciumdioxid" bedeutet hierbei, dass das Siliciumdioxid nicht als geschlossener Film den Kern umgibt, sondern in Form von Partikeln vorliegt, die ihrerseits aggregiert und/oder agglomeriert sind und Erhebungen und Vertiefungen der Hülle aufweisen. Figur 1 zeigt eine REM-Aufnahme der erfindungsgemäß verwendeten Partikel. Im Gegensatz zu einem, einen Kern umgebenden, dichten Film ist die Hülle der erfindungsgemäß verwendeten Partikel nicht als dicht zu bezeichnen. Es wird davon ausgegangen, dass die Partikel eine poröse Hülle bilden und die Porosität über die Schichtdicke variieren kann, wodurch ebenfalls das Freisetzungsverhalten des Metalloxids variiert werden kann. Die Bindung der Hülle zum Kern ist dabei derart, dass bei Dispergierung, beispielsweise mittels eines Dissolvers, nur eine minimale oder keine Ablösung der Hülle vom Kern zu beobachten ist.

Der Kern der erfindungsgemäß verwendeten Kern-Hülle-Partikel weist eine annähernd sphärische oder sphäroide Form auf. "Annähernd" soll bedeuten, dass Abweichungen von einer idealen sphärischen oder sphäroiden Form des Kernes möglich sind. Das im Kern vorliegende Metalloxid ist ein bewuchshemmendes Metalloxid. Unter bewuchshemmend ist zu verstehen, dass diese Metalloxide in der Lage sind, eine Oberflächenbesiedelung durch Tiere, inklusive Mikroorganismen, und Pflanzen auf Objekten, auf die die Partikel durch Beschichtung eingebracht sind, zu verzögern, einzudämmen oder zu verhindern, insbesondere bei Objekten, welche mit Wasser, insbesondere Meerwasser, in Kontakt stehen. Gemäß der Erfindung kann das im Kern vorliegende Metalloxid ein einzelnes Metalloxid, eine physikalische Mischung von zwei oder mehreren Metalloxiden oder ein Mischoxid aus zwei oder mehreren Metalloxiden sein. Bei einem Mischoxid liegt eine innige Vermischung der Mischoxidkomponenten auf atomarer Ebene vor.

Bevorzugt ist das bewuchshemmende Metalloxid aus der Gruppe bestehend aus Kupferoxid, Titandioxid, Eisenoxid, Manganoxid, Vanadiumoxid, Zinnoxid und Zinkoxid ausgewählt.

Am besten geeignet sind Kern-Hülle-Partikel, deren Kern als Hauptbestandteil Kupfer-(I)-oxid aufweist oder daraus besteht. Die Bestandteile des Kernes können beispielsweise mittels Röntgendiffraktometrie ermittelt werden.

Die Hülle der erfindungsgemäß verwendeten Partikel besteht im Wesentlichen aus Siliciumdioxid. Darüber hinaus umfasst Siliciumdioxid im Rahmen der Erfindung auch Kieselsäuren. Diese weisen auf ihrer Oberfläche Hydroxylgruppen auf; die Partikel sind daher hydrophil. Bevorzugt weisen die Kieselsäuren eine aggregierte Struktur auf.

Typische Vertreter von Kieselsäuren sind pyrogene Kieselsäuren und Fällungskieselsäuren.

Die besten Ergebnisse werden mit pyrogenen Kieselsäuren erhalten. Pyrogene Kieselsäuren werden durch Flammenhydrolyse von Siliciumverbindungen, wie beispielsweise Chlorsilanen, hergestellt. Bei diesem Verfahren wird ein hydrolysierbares Siliciumhalogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Eine so hergestellte Kieselsäure wird als pyrogene, hydrophile Kieselsäure bezeichnet. Bei diesem Prozess werden zunächst Primärpartikel gebildet, die nahezu frei von inneren Poren sind. Diese Primärteilchen verschmelzen während des Prozesses über sogenannte Sinterhälse zu Aggregaten, die ein dreidimensionales Netzwerk bilden. Mehrere Aggregate können schließlich Agglomerate bilden.

Bevorzugt handelt es sich um pyrogene Kieselsäuren mit einer BET-Oberfläche von 90 bis 300 $m^2/g$. Der mittlere Primärpartikeldurchmesser beträgt bevorzugt 5 bis 50 nm.

Es ist ebenso möglich, dass die Hülle der erfindungsgemäß verwendeten Partikel aus hydrophobierten Kieselsäurepartikeln besteht. Diese können beispielsweise erhalten werden, indem man die auf der Oberfläche von hydrophilen Kieselsäuren vorliegenden Hydroxylgruppen mit Organosilanen, Halogenorganosilanen, Silazanen oder Polysiloxanen umsetzt. Bevorzugt können Octyltrimethoxysilan, Octyltriethoxysilan, Hexamethyldisilazan, 3-Methacryloxypropyltrimethoxysilan, 3-Methacryloxypropyltriethoxysilan, Hexadecyltrimethoxysilan, Hexadecyltriethoxysilan, Dimethylpolysiloxan, Nonafluorohexyltrimethoxysilan, Tridecafluorooctyltrimethoxysilan und/oder Tridecafluorooctyltriethoxysilan als Mittel zur Hydrophobierung eingesetzt werden. Auch bei den hydrophobierten Kieselsäuren werden die besten Ergebnisse ausgehend von pyrogenen Kieselsäuren erhalten.

Eine besondere Ausführungsform der Erfindung sieht vor, dass die Hülle ein Gemisch von hydrophilen und hydrophoben Siliciumdioxidpartikeln aufweist.

Der Anteil des bewuchshemmenden Metalloxids und des Siliciumdioxids kann in weiten Grenzen variiert werden. Bevorzugt beträgt der Anteil an bewuchshemmendem Metalloxid 20 bis 80 Gew.-% und der an Siliciumdioxid 80 bis 20 Gew.-% bezogen auf die Kern-Hülle-Partikel. Besonders bevorzugt ist eine Ausführungsform, bei der der Anteil an bewuchshemmendem Metalloxid 30 bis 70 Gew.-% und der an Siliciumdioxid 70 bis 30 Gew.-% beträgt.

In einer weiteren besonderen Ausführungsform enthalten die Kern-Hülle-Partikel 80 bis 90 Gew.-% bewuchshemmendes Metalloxid, bezogen auf die Kern-Hülle-Partikel.

Der Anteil an bewuchshemmendem Metalloxid und Siliciumdioxid in Summe beträgt in der Regel wenigstens 98 Gew.-% und bevorzugt wenigstens 99,5 Gew.-%, jeweils bezogen auf die Kern-Hülle-Partikel. Der Anteil der Komponenten kann durch chemische Analyse oder Röntgenfluoreszenzanalyse bestimmt werden.

Das Verhältnis von mittlerer Dicke der Hülle zu mittlerem Kerndurchmesser der Kern-Hülle-Partikel ist bevorzugt 1 : 50 bis 1 : 2 oder 1 : 50 bis 5 : 1, besonders bevorzugt 1 : 10 bis 1 : 3.

Die BET-Oberfläche, bestimmt nach DIN 66131, der erfindungsgemäß verwendeten Kern-Hülle-Partikel beträgt bevorzugt 30 bis 150 $m^2/g$ und besonders bevorzugt 50 bis 100 $m^2/g$.

Die erfindungsgemäß verwendeten Kern-Hülle-Partikel können durch ein Verfahren hergestellt werden, bei dem man Partikel, die im Wesentlichen aus Siliciumdioxid bestehen und Partikel, die im Wesentlichen aus wenigstens einem bewuchshemmenden Metalloxid ausgewählt aus der Gruppe bestehend aus Kupferoxid, Titandioxid, Eisenoxid, Manganoxid, Vanadiumoxid, Zinnoxid und Zinkoxid bestehen, mit einem spezifischen Energieeintrag von 200 bis 2000 kJ/kg, bevorzugt 500 bis 1800 kJ/kg und besonders bevorzugt 700 bis 1500 kJ/kg in Kontakt bringt. Der spezifische Energieeintrag berechnet sich nach:

$$\text{Spezifischer Energieeintrag} = (P_D - P_{D,0}) \times t \, / \, m,$$

mit

$P_D$ = gesamte eingetragene Leistung
$P_{D,0}$ = Leerlaufleistung
$t$ = Zeit des Energieeintrages
$m$ = Masse der Einsatzstoffe Siliciumdioxid und Metalloxid.

Bei der eingetragenen Energie handelt es sich um mechanische Energie. Der Energieeintrag erfolgt am besten mit einem Aggregat mit einer Leistung von wenigstens 1 kW, bevorzugt 1 bis 20 kW, besonders bevorzugt 2 bis 10 kW.

Bei einem spezifischen Energieeintrag von weniger als 200 kJ/kg oder mehr als 2000 kJ/kg werden keine erfindungsgemäß verwendbaren Kern-Hülle-Partikel erhalten. Vielmehr wird davon ausgegangen, dass sich bei weniger als 200 kJ/kg ein physikalisches Gemisch aus Siliciumdioxidpartikeln und Metalloxidpartikeln bildet. Bei mehr als 2000 kJ/kg wird davon ausgegangen, dass die Strukturen der Einsatzstoffe zerstört werden, so dass keine erfindungsgemäß verwendbaren Partikel resultieren können.

Eine besondere Ausführungsform der Erfindung sieht vor, beim Inkontaktbringen ein Gemisch von hydrophilen und hydrophoben Siliciumdioxidpartikeln einzusetzen.

Bei dem Inkontaktbringen handelt es sich um ein trockenes Inkontaktbringen. Dies bedeutet, dass keine Flüssigkeit eingesetzt wird. Es ist jedoch möglich, dass den Einsatzstoffen Feuchtigkeit anhaftet, diese Kristallwasser aufweisen oder gegebenenfalls ein flüssiges Reaktionsprodukt gebildet wird.

Das Inkontaktbringen erfolgt bevorzugt in einer Rotorkugelmühle. Die Mahlkugeln sind bevorzugt aus Stahl. Bei Einsatz einer Rotorkugelmühle bezieht sich $P_D$ auf die gesamte, eingetragene Leistung, d.h. inklusive Siliciumdioxid, Metalloxid und Mahlkugeln. $P_{D,0}$ beschreibt die Leerlaufleistung, d.h. ohne Siliciumdioxid, Metalloxid und Mahlkugeln. Das Füllvolumen der Einsatzstoffe in der Rotorkugelmühle beträgt bevorzugt 10 bis 80 Vol.-%, bevorzugt 20 bis 50 Vol.-%, jeweils bezogen auf das Volumen der Rotorkugelmühle.

Die Dauer des Inkontaktbringens beträgt bevorzugt 0,1 bis 120 Minuten, besonders bevorzugt 0,2 bis 60 Minuten, ganz besonders bevorzugt 0,5 bis 10 Minuten. Gegebenenfalls können im Anschluss an das Inkontaktbringen feinteiligere Partikel abgetrennt werden.

Die Stampfdichte der eingesetzten, im Wesentlichen aus Siliciumdioxid bestehenden Partikel beträgt bevorzugt 20 - 300 g/l, besonders bevorzugt 50 - 200 g/l. Die erhaltenen Kern-Hülle-Partikel besitzen vorzugsweise eine Stampfdichte von 400 - 1000 g/l. Die Stampfdichte wird mittels DIN EN ISO 787/11 bestimmt.

Bevorzugt werden Kupfer-(I)-oxid und pyrogene Kieselsäure mit einer BET-Oberfläche von 90 bis 300 $\text{m}^2$/g eingesetzt.

Die erfindungsgemäß verwendeten Partikel, deren Herstellung sowie Beschichtungen, die diese Partikel enthalten, sind in der nicht vorveröffentlichten PCT-Patentanmeldung mit der Anmeldenummer PCT/EP2014/060222 beschrieben. Diese Beschichtungen enthalten filmbildende Harze, wie Hydroxyl- oder Carboxyl-Gruppen aufweisende Acrylate, Silikonharze, Polyester oder Polyurethane sowie Härter. Derartige Harz-Härter-Systeme sind nicht thermoplastisch, sondern ergeben vernetzte Beschichtungen. Im Gegensatz hierzu hat die vorliegende Erfindung eine Zusammensetzung zum Gegenstand, die ein thermoplastisches Polymer anstelle eines Harz-Härter-Systems enthält.

Das thermoplastische Polymer ist ein Polyamid, ein Polyolefin, ein Fluorpolymer oder ein thermoplastisches Elastomer.

Das Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6, PA66 oder Copolyamide auf dieser Basis mit anderen Einheiten wie beispielsweise co-PA6/66/610, co-PA6/12, co-PA6/66/12 oder co-PA6/612/12. In einer bevorzugten Ausführungsform enthalten die Monomereinheiten des Polyamids im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können. Besonders bevorzugt wird PA11 oder PA12 eingesetzt.

Das Polyamid kann auch ein Polyetheramid oder ein Polyetheresteramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole mittels reduktiver Aminierung oder Kupplung an Acrylnitril mit nachfolgender Hydrierung zugänglich (z. B. EP-A-0 434 244; EP-A-0 296 852). Beim Polyetherdiamin kann die Polyethereinheit beispielsweise auf 1.2-Ethandiol, 1.2-Propandiol, 1.3-Propandiol, 1.4-Butandiol oder 1.3-Butandiol basieren. Die Polyethereinheit kann auch gemischt aufgebaut sein, etwa mit statistischer oder blockweiser Verteilung der von den Diolen herrührenden Einheiten. Das Gewichtsmittel der Molmasse der Polyetherdiamine liegt bei 200 bis 5000 g/mol und vorzugsweise bei 400 bis 3000 g/mol; ihr Anteil am Polyetheramid beträgt bevorzugt 4 bis 60 Gew.-% und besonders bevorzugt 10 bis 50 Gew.-%. Geeignete Polyetherdiamine sind z. B. in Form der JEFFAMIN® D- oder ED-Typen oder der ELASTAMINE®-Typen bei der Huntsman Corp. oder in Form der Polyetheramin D-Reihe bei der BASF SE kommerziell erhältlich. In geringen Mengen kann auch ein Polyethertriamin mitverwendet werden, z. B. ein JEFFAMIN®T-Typ, falls ein verzweigtes Polyetheramid eingesetzt werden soll.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer bevorzugten Ausführungsform wird eine Mischung aus 30 bis 99 Gew.-%, bevorzugt 40 bis 98 Gew.-% und besonders bevorzugt 50 bis 96 Gew.-% Polyamid im engeren Sinne sowie 1 bis 70 Gew.-%, bevorzugt 2 bis 60 Gew.-% und besonders bevorzugt 4 bis 50 Gew.-% Polyetheramid verwendet.

Beim Polyolefin handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-Vinylacetat-Copolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch.

Das Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein.

Geeignete thermoplastische Elastomere sind beispielsweise solche vom Typ TPE-O, also Elastomere auf Olefinbasis, beispielsweise Blends aus Polypropylen und EPM oder EPDM, solche vom Typ TPE-U, also Elastomere auf Urethanbasis, solche vom Typ TPE-E, also thermoplastische Polyesterelastomere, solche vom Typ TPE-S, also Styrolblockcopolymere, beispielsweise SBS oder SEBS oder solche vom Typ TPE-A, also Polyamidelastomere wie beispielsweise Polyetheresteramide oder Polyetheramide. Polyamidelastomere weisen die Charakteristika von Polyamiden auf; sie werden daher im Rahmen der Erfindung auch als Polyamide angesehen. Alle diese thermoplastischen Elastomere sind dem Fachmann wohlbekannt und in einer Vielzahl von Handelstypen kommerziell erhältlich, so dass eine genauere Beschreibung unnötig ist.

Darüber hinaus kann die thermoplastische Zusammensetzung noch übliche Mengen von Zusatzstoffen enthalten, die zum Einstellen bestimmter Eigenschaften benötigt werden. Beispiele hierfür sind Schlagzähmodifier, Weichmacher, Pigmente bzw. Füllstoffe wie Ruß, Talkum, Titandioxid, Zinksulfid, Verstärkungsfasern wie z.B. Glasfasern, Verarbeitungshilfsmittel wie Wachse, Zinkstearat oder Calciumstearat, Antioxidantien, UV-Stabilisatoren sowie Zusätze, die dem Produkt antielektrostatische Eigenschaften verleihen wie z. B. Kohlenstofffasern, Graphitfibrillen, Fasern aus rostfreiem Stahl bzw. Leitfähigkeitsruß. Weiterhin können zur Effektivitätssteigerung des Metalloxides weitere sogenannte Co-Biozide wie z.B. anorganische Nanopartikel von Silber, Titandioxid, Zinkoxid, etc. sowie organische Biozide wie Kupferpyrithion, Kupferthiocyanat, Tolyfluanid, Zinkpyrithion, Chlorhexidin, Dichlofluanid, Bis(1-hydroxy-1H-pyridin-2-thionato-O,S)kupfer, 2-Methylthio-4-tert-butylamino- 6-cyclopropylamino-s-triazin, quaternäre Ammoniumverbindungen (Didecyldimethylammoniumchlorid, 4,5-Dichlor-2-N-octyl-4-isothiazolon-3-on, etc.) in der thermoplastischen Zusammensetzung enthalten sein.

Die erfindungsgemäße thermoplastische Zusammensetzung ist in einer bevorzugten Ausführungsform eine Formmasse. Formmassen werden in der Regel durch Mischen der Komponenten in der Schmelze hergestellt. Die Zusammensetzung kann aber auch ein Pulver sein. Ein solches Pulver kann beispielsweise durch Kaltmahlen einer entsprechenden Formmasse hergestellt werden, durch Fällen des Polymers aus einer Lösung in Gegenwart der Kern-Hülle-Partikel oder durch Trockenmischen eines Polymerpulvers mit einem Pulver aus den Kern-Hülle-Partikeln. Dies ist besonders bei Polyolefinen vorteilhaft, die üblicherweise im Wirbelbett hergestellt werden und als Pulver anfallen, das bei Bedarf durch Mahlen weiter zerkleinert werden kann.

Die thermoplastische Formmasse bzw. das thermoplastische Pulver kann oberhalb seiner Erweichungstemperatur mit allen üblichen thermischen Verarbeitungsverfahren zur Beschichtung von beliebigen Oberflächen oder zur Herstellung definierter Formkörper verwendet werden. Für das Beschichten sind die Extrusionsbeschichtung sowie alle gängigen thermischen Spritzverfahren wie Schmelzbadspritzen, Lichtbogenspritzen, Plasmaspritzen, Flammspritzen, Hochgeschwindigkeitsflammspritzen, Detonationsspritzen, Kaltgasspritzen, Laserspritzen, etc. zu nennen. Zur Herstellung definierter Formkörper sind weitere Verarbeitungsmöglichkeiten wie z. B.: Blasformen, Spritzgießen, Folienblasen, Extrudieren von Profilen, Platten oder Rohren, Heißverstemmen oder Kalandrieren, freies Verformen über einem Werkzeug und das Vakuumtiefziehen zu nennen. Prinzipiell lassen sich Thermoplaste auch mechanisch bearbeiten. Unter mechanischer Bearbeitung versteht man z. B. Sägen, Fräsen, Schleifen, Drehen, Hobeln sowie die Fügeverfahren Kleben und Schweißen.

Die erfindungsgemäße Zusammensetzung kann aber auch als Lösung aufgebracht werden, indem ein Copolyamid in einem passenden Lösemittel gelöst und die Partikel darin dispergiert werden. Geeignete lösliche Copolyamide sind beispielsweise in der US 4 480 011 beschrieben.

Die Schicht aus der erfindungsgemäßen Zusammensetzung kann direkt auf der Substratoberfläche aufgebracht sein. In diesem Fall ist es vorteilhaft, wenn die Zusammensetzung ein Haftharz, beispielsweise Epoxidharz (etwa Araldit®) enthält. Im Allgemeinen befindet sich aber zwischen der Substratoberfläche und der Schicht aus der erfindungsgemäßen Zusammensetzung mindestens eine weitere Schicht. Beispielsweise kann es sich um folgende Schichten handeln:

- Eine Keramikschicht, beispielsweise gemäß WO 03/093374;
- eine Grundierungsschicht, beispielsweise aus Epoxidharz (US 5 580 659) oder einer wasserbasierenden Mischung aus Epoxidharz und Polyacrylatlatex (WO 00/04106);
- eine Haftvermittlerschicht aus einem Polyamidschmelzkleber, der beispielsweise als Pulver durch Sprühen etc. aufgebracht werden kann (EP 1 808 468 A2), oder aus einem Polyolefin, das funktionelle Gruppen trägt. Als funktionelle Gruppen kommen beispielsweise Carboxylgruppen oder Säureanhydridgruppen (WO 02/094922), Epoxygruppen oder Alkoxysilangruppen (EP 0 346 101 A2) in Frage. Die Polyolefinschicht kann auch geschäumt sein. Das Polyolefin ist bevorzugt Polyethylen oder Polypropylen;
- ein anders zusammengesetzter Haftvermittler, der gewährleisten soll, dass bei mechanischer Beanspruchung der Verbund nicht beeinträchtigt wird.

Gegenstand der Erfindung ist auch ein Verfahren zur Herstellung eines mit der erfindungsgemäßen thermoplastischen Zusammensetzung beschichteten Substrats. Das Verfahren enthält folgende Schritte:

a) Man bringt Partikel, die im Wesentlichen aus Siliciumdioxid bestehen, vorzugsweise pyrogene Kieselsäure oder Fällungskieselsäure, und Partikel, die im Wesentlichen aus wenigstens einem bewuchshemmenden Metalloxid, welches in sphärischer und/oder sphäroider Form mit einem zahlenmittleren Partikeldurchmesser von 1 bis 20 $\mu$m, bevorzugt 2 bis 10 $\mu$m, ganz bevorzugt 3 bis 7 $\mu$m vorliegt, bestehen, unter einem spezifischen Energieeintrag von 200 bis 2000 kJ/kg in Kontakt;

b) gegebenenfalls trennt man im Anschluss an das Inkontaktbringen feinteiligere Partikel ab;

c) man mischt das erhaltene Produkt mit thermoplastischem Polymer und gegebenenfalls üblicherweise verwendeten Zusatzstoffen;

d) die erhaltene Mischung wird auf ein Substrat unter Bildung einer Beschichtung appliziert.

Hinsichtlich Details dieses Verfahrens sei auf die weiter oben gemachten Ausführungen im Hinblick auf die erfindungsgemäße thermoplastische Zusammensetzung verwiesen.

Ein weiterer Gegenstand der Erfindung ist ein mit der erfindungsgemäßen Zusammensetzung beschichtetes Substrat. Prinzipiell sind alle Substrate geeignet, beispielsweise solche aus Metall, Kunststoff, Glas oder glasfaserverstärktem Kunststoff (GFK). Außerdem sind alle Formkörper, die aus der erfindungsgemäßen thermoplastischen Formmasse geformt wurden, Gegenstand der Erfindung. Die entsprechende Beschichtung bzw. der entsprechende Formkörper kann Anwendung im aquatischen Bereich (Teil eines Sportbootes, eines kommerziellen Schiffes, eines in Wasser eintauchenden Bauwerkes wie Bootssteg, Kaimauer, Ölbohrplattform, Fahrwassermarkierung, Messsonde oder andere) sowie im Hygienesektor bzw. Gesundheitswesen (Türgriffe, Handgriffe, Bodenbeläge, Regale, Tischplatten, Fliesen oder andere) finden.

**Beispiele**

Einsatzstoffe

AEROSIL® R805, BET-Oberfläche 150 $m^2$/g, Stampfdichte ca. 60 g/l,

AEROSIL® R9200, BET-Oberfläche 150 bis 190 $m^2$/g, Stampfdichte ca. 200 g/l, beide von Evonik Industries AG.

Kupfer-(I)-oxid, Sigma-Aldrich; mittlerer Partikeldurchmesser 5,9 $\mu$m

STANDART® Resist AT, Eckart. Bei dem Material handelt es sich um ein mit einem Siliciumdioxidfilm umhülltes Kupfer, mit einem Kupfergehalt von 97 % und einer BET-Oberfläche von 1 $m^2$/g.

Rotorkugelmühle Simoloyer® CM05, Firma Zoz GmbH, Wenden, Deutschland.

Im Rahmen der Erfindung wurde die Dicke der Hülle ausgehend von der Menge und der Dimension des eingesetzten Metalloxides und der Menge der eingesetzten Siliciumdioxidpartikel berechnet.

Die Berechnung ist beispielhaft für 0,06 kg Kupferoxid mit einem mittleren Partikeldurchmesser $d_{50}$ von 5,9 $\mu$m und einer Dichte $\rho_{Kupferoxid}$ von 6000 kg/$m^3$ und 0,04 kg pyrogener Kieselsäure mit einem mittleren Primärpartikeldurchmesser $d_{primär}$ von 12 nm und einer Stampfdichte $\rho_{Silica}$ von 200 kg/$m^3$ dargestellt.

1) Volumen Kupferoxid:

$$V_{0,\,Kupferoxid} = 4/3 \cdot \pi \cdot r^3 = \pi/6 \cdot d^3 = \pi/6 \cdot (5,9 \cdot 10^{-6} \text{ m})^3 = 1,08 \cdot 10^{-16} \text{ m}^3$$

2) Gesamtvolumen Kupferoxid:

$$V_{Kupferoxid} = m/\rho = 0,06 \text{ kg}/(6000 \text{ kg/m}^3) = 1,00 \cdot 10^{-5} \text{ m}^3$$

$$\text{Anzahl Kupferoxid-Partikel: } n_{Kupferoxid} = V_{Kupferoxid}/V_{0,\,Kupferoxid} = 9,29 \cdot 10^{10}$$

3) Gesamtvolumen pyrogene Kieselsäure:

$$V_{Silica} = m/\rho = 0,04 \text{ kg}/(200 \text{ kg/m}^3) = 2,00 \cdot 10^{-4} \text{ m}^3$$

4) Annahme pyrogene Kieselsäure als dichte Kugelpackung auf Kupferoxid-Partikel $\Delta V$ = Volumen der Partikel von pyrogener Kieselsäure pro Kupferoxid-Partikel

$$\Delta V = V_{Silica}/n_{Kupferoxid} = 2,00 \cdot 10^{-4} \text{ m}^3/(9,29 \cdot 10^{10}) = 2,15 \cdot 10^{-15} \text{ m}^3$$

5) Volumen Kupferoxid + Silica = V = $V_0$, Kupferoxid + $\Delta V$ = 2,26·$10^{-15}$ $m^3$

6) Schichtdicke

$$d^3 = V \cdot 6/\pi; \quad d = 1,63 \cdot 10^{-5} \text{ m}; \quad \Delta d = d - d_{50} = 1,04 \cdot 10^{-5} \text{ m}$$

Demnach beträgt die Dicke der Kieselsäurehülle 5,19 $\mu$m.

Bei den nachfolgenden Beispielen zeigten REM/BSE-Auswertungen (Rasterelektronenmikroskopie mit Detektion von zurückgestreuten Elektronen), dass der Anteil an nicht umhüllten Metalloxidpartikeln und Siliciumdioxidpartikeln, die nicht als Teil der Hülle vorliegen, vernachlässigbar gering ist oder dass dieser Anteil überhaupt nicht existent ist.

Es wurde auch für den Fall, dass pyrogene Kieselsäuren als Bestandteil der erfindungsgemäßen Kern-Hülle-Partikel vorliegen, keine oder nur eine vernachlässigbare, verdickende Wirkung der Beschichtung beobachtet, wenn diese in Zubereitungen zur Herstellung eines bewuchshemmenden Substrates eingearbeitet wurde.

Beispiel 1 (Herstellung von Kern-Hülle-Partikeln):

Der Mahlraum der Rotorkugelmühle wurde mit 66 g Kupfer-(I)-oxid, 100 g AEROSIL® R805 und 7,5 kg Stahlkugeln mit einem Durchmesser von 4,8 mm und einer Dichte von 7550 kg/m$^3$ gefüllt. Der Füllgrad des Mahlraumes betrug insgesamt 66 %. Nach dem Einfüllen wurde der Mahlraum mit Stickstoff überschichtet. Die Drehzahl des Rührwerks betrug 850 U/min. Der Mahlraum wurde doppelwandig mit Wasser gekühlt. Die Mahldauer t betrug 2 min.

Der spezifische Energieeintrag betrug 825 kJ/kg.

Die BET-Oberfläche der erhaltenen Kern-Hülle-Partikel betrug 70 m$^2$/g. Die Stampfdichte betrug 760 g/l.

Figur 1 zeigt eine REM-Aufnahme eines solchen Kern-Hülle-Partikels. Bei Ultraschallbehandlung ließ sich keine nennenswerte Ablösung der Hülle feststellen. Das heißt, es handelt sich um eine stabile Hülle.

Beispiel 2 (Herstellung von Kern-Hülle-Partikeln):

Der Mahlraum der Rotorkugelmühle wurde mit 100 g Kupfer-(I)-oxid, 66 g AEROSIL® R9200 und 7,5 kg Stahlkugeln mit einem Durchmesser von 4,8 mm und einer Dichte von 7550 kg/m$^3$ gefüllt. Der Füllgrad des Mahlraumes betrug insgesamt 66 %. Nach dem Einfüllen wurde der Mahlraum mit Stickstoff überschichtet. Die Drehzahl des Rührwerks betrug 850 U/min. Der Mahlraum wurde doppelwandig mit Wasser gekühlt. Die Mahldauer t betrug 2 min. Der spezifische Energieeintrag betrug 825 kJ/kg.

Die berechnete Dicke der Hülle betrug ca. 5,2 µm.

Beispiel 3 (Freisetzung von Kupferionen):

Beispiel 3a (Vergleich):

In einen Faltenfilter wurden 0,625 g Cu$_2$O, entsprechend 1,1 g/l Kupfer, eingewogen und der Faltenfilter verschlossen. Der verschlossene Faltenfilter wurde bei 20 bis 25 °C in eine mit 250 ml Meerwasser (Marine broth, Difco 2216, steril) gefüllte Glasflasche gegeben und war von der Flüssigkeit vollständig umgeben. Es wurde mit einem Magnetrührer bei einer Drehzahl von 300 U/min gerührt und alle 30 Minuten die Kupferfreisetzung bestimmt.

Die Bestimmung der freigesetzten Cu$^{2+}$-Ionen erfolgte nach Oxidation mit Wasserstoffperoxid kolorimetrisch.

Beispiel 3b (Vergleich) :

Analog Beispiel 3a, jedoch wurden 0,275 g STANDART® Resist AT, Eckart anstelle von Cu$_2$O eingesetzt. Es wird in der US2004/197564A1 als bewuchshemmender Stoff eingesetzt.

Beispiel 3c (gemäß Erfindung):

Analog Beispiel 3a, jedoch wurden 1,563 g der Kern-Hülle-Partikel aus Beispiel 1 eingesetzt.

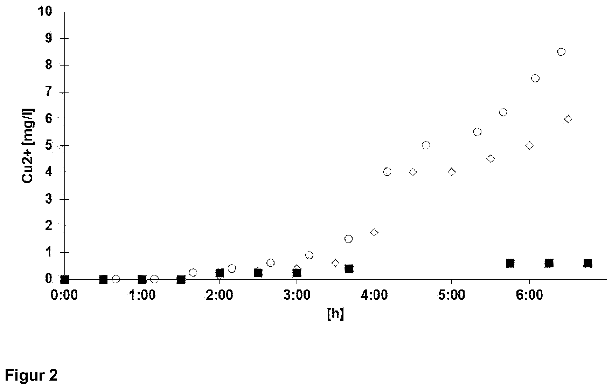

Die Ergebnisse aus den Beispielen 3a-c sind in der Figur 2 wiedergegeben. Dabei ist die Konzentration an Cu$^{2+}$-Ionen in Abhängigkeit von der Versuchszeit dargestellt. Hierbei ist der Vergleichsversuch 3a mit Kreisen, der Vergleichsversuch 3b mit Rauten und der erfindungsgemäße Versuch 3c mit Quadraten gekennzeichnet. Es zeigt sich, dass die Freisetzung von Cu$^{2+}$-Ionen in den Vergleichsversuchen 3a und 3b deutlich schneller war als im erfindungsgemäßen Beispiel 3c.

Beispiel 4 [Freisetzung von Kupferionen aus thermoplastischer Frommasse (Polyamid 12)]:

a) Herstellung der Kern-Hülle-Partikel:

Der Mahlraum der Rotorkugelmühle wurde mit 60 g AEROSIL®R202 bzw. 60 g AEROSIL®200, 40 g Kupfer-(I)-oxid und 7,5 kg Stahlkugeln mit einem Durchmesser von 4,8 mm und einer Dichte von 7550 kg/m$^3$ befüllt. Nach dem Einfüllen wurde der Mahlraum mit Stickstoff überschichtet. Die Drehzahl des Rührwerks betrug 850 U/min. Der Mahlraum wurde doppelwandig mit Wasser gekühlt und die Mahldauer t betrug 2 min.

b) Herstellung und Zusammensetzung der thermoplastischen Formmasse:

Je 14 g der Kern-Hülle-Partikel (mit AEROSIL®200 bzw. AEROSIL®R202) wurden mit 56 g VESTAMID®NRG 4901-Granulat im Labormischer HAAKE™ Rheomix OS von Thermo Scientific auf eine Zylindertemperatur von 240 °C aufgeheizt und verknetet. Nach einer Verarbeitungszeit von t = 5 min wurde die Formmasse aus dem Kneter entfernt und anschließend durch Aufheizen auf 240 °C zu Platten mit einer Größe von 160 x 160 x 1

mm$^3$ [Länge x Breite x Dicke] verpresst.

Zu Vergleichszwecken wurde die äquivalente Menge Kupfer-(I)-oxid, d.h. 5,6 g, mit 64,4 g VESTAMID®NRG 4901 (Polyamid 12) aufgeschmolzen und verknetet sowie anschließend zu einer Platte verpresst.

c) Kupferionenfreisetzung in simuliertem Meerwasser:

Zur Bestimmung der freigesetzten Kupferionen wurden vier zugeschnittene Probenplättchen aus je einer Formmasse aus Beispiel 4b in einen Coupon-Reaktor eingebaut und die Gefäße mit jeweils 300 ml künstlichem Meerwasser (Rezeptur nach DIN EN ISO 10253) befüllt und unter Rühren bei 25 °C aufbewahrt.

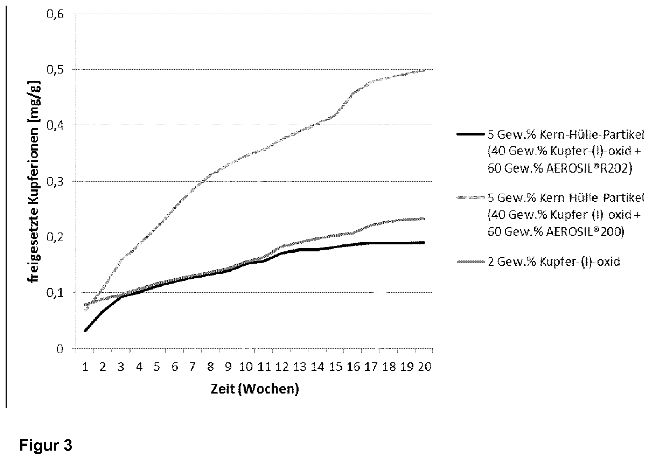

Alle sieben Tage wurde das wässerige Medium ausgetauscht und die freigesetzte Kupferionenkonzentration mittels eines kolorimetrischen Schnelltests (Aquaquant, Merck) bestimmt. Figur 3 zeigt die erhaltenen Ergebnisse der gemessenen, freigesetzten Kupferionenkonzentration pro Gramm thermoplastischer Formmasse. Es ist zu beobachten, dass bei Verwendung von hydrophilen Siliciumdioxid-Partikeln eine signifikant höhere Kupferionenkonzentration über die Zeit gemessen werden kann. Somit bedingt die Hydrophilie der AEROSIL® 200-Partikel, die auf der Oberfläche der Kupfer-(1)-oxid-Partikel anhaften, eine höhere Wasseraufnahmekapazität und somit erhöhte Freisetzung gelöster Kupferionen. Das hydrophobe AEROSIL® R202 verhält sich ähnlich wie unbehandeltes Kupfer-(I)-oxid. Durch gezieltes Mischen der Kern-Hülle-Partikel und eine geeignete Auswahl des partikulären Siliciumdioxids lässt sich somit die Freisetzung kontrolliert steuern.

Beispiel 5 [Freisetzung von Kupferionen aus thermoplastischer Formmasse (Polyamid 12 bzw. Polyamid 66)1:

a) Herstellung der Kern-Hülle-Partikel:

Der Mahlraum der Rotorkugelmühle wurde mit 25 g AEROSIL®200 und 75 g Kupfer-(1)-oxid (Kern-Hülle-Partikel mit 75 Gew.-% $Cu_2O$) bzw. 50 g AEROSIL®200 und 50 g Kupfer-(I)-oxid (Kern-Hülle-Partikel mit 50 Gew.-% $Cu_2O$) sowie 7,5 kg Stahlkugeln mit einem Durchmesser von 4,8 mm und einer Dichte von 7550 kg/m$^3$ gefüllt. Nach dem Einfüllen wurde der Mahlraum mit Stickstoff überschichtet. Die Drehzahl des Rührwerks betrug 850 U/min. Der Mahlraum wurde doppelwandig mit Wasser gekühlt und die Mahldauer t betrug 2 min.

b) Herstellung und Zusammensetzung der thermoplastischen Formmasse:

28 g der Kern-Hülle-Partikel aus Beispiel 5a mit 75 Gew.-% $Cu_2O$ wurden mit 42 g VESTAMID®NRG 3001 (Polyamid 12) bzw. 28 g der Kern-Hülle-Partikel aus Beispiel 5a mit 50 Gew.-% $Cu_2O$ wurden mit 42 g Durethan®A 30S (Polyamid 66) im Labormischer HAAKE™ Rheomix OS von Thermo Scientific auf eine Zylindertemperatur von 240 °C (Polyamid 12) bzw. 270 °C (Polyamid 66) aufgeheizt und verknetet. Nach einer Verarbeitungszeit von t = 5 min wurde die Formmasse aus dem Kneter entfernt und anschließend durch Aufheizen auf 240 °C (PA12) bzw. 270 °C (PA66) zu Platten mit einer Stärke von 1 mm verpresst.

Zu Vergleichszwecken wurde die der Zusammensetzung mit 75 Gew.-%$Cu_2O$ äquivalente Menge Kupfer-(I)-oxid, d.h. 21 g, mit 49 g VESTAMID®NRG 3001 (Polyamid 12) aufgeschmolzen und verknetet sowie anschließend zu einer Platte verpresst.

c) Kupferionenfreisetzung in simuliertem Meerwasser:

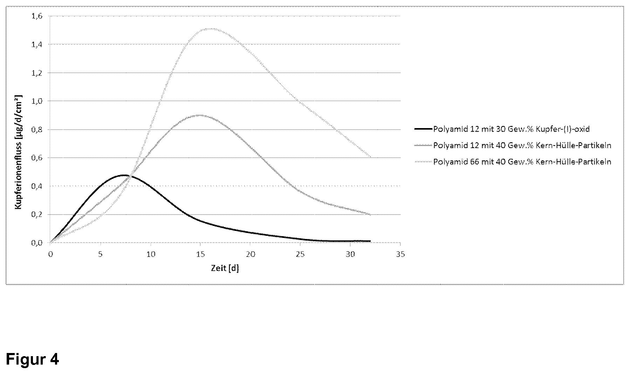

Zur Bestimmung der freigesetzten Kupferionen wurden vier zugeschnittene Probenplättchen aus je einer Formmasse aus Beispiel 5b in einen Coupon-Reaktor eingebaut und die Gefäße mit jeweils 300 ml künstlichem Meerwasser (Rezeptur nach DIN EN ISO 10253) befüllt und unter Rühren bei 25°C aufbewahrt. Alle sieben Tage wurde das wässerige Medium ausgetauscht und die freigesetzte Kupferionenkonzentration mittels eines kolorimetrischen Schnelltests (Aquaquant, Merck) bestimmt. Figur 4 zeigt die erhaltenen Ergebnisse des gemessenen Kupferionenflusses, d.h. der Kupferionenkonzentration pro Zeit und Fläche. Die Polyamid 12-Proben mit reinem Kupfer-(I)-oxid und den Kern-Hülle-Partikeln lassen sich direkt vergleichen (75 Gew.-% $Cu_2O$).

Wie in Beispiel 4 wird deutlich, dass bei Einarbeitung der hydrophilen Kern-Hülle-Partikel signifikant mehr Kupferionen aus den thermoplastischen Formmassen freigesetzt werden. Unter Verwendung von Polyamid 66

(50 Gew.-% $Cu_2O$) zeigt sich, dass selbst bei geringerer Kupferionenkonzentration signifikant höhere Mengen Kupferionen detektiert werden können. Bedingt durch die deutlich bessere Wasseraufnahmekapazität von Polyamid 66 im Vergleich zu Polyamid 12 kann ein größerer Kupferionenfluss gemessen werden. Durch gezieltes Mischen der Kern-Hülle-Partikel und eine geeignete Auswahl des partikulären Siliciumdioxids (siehe Beispiel 4) sowie durch geeignete Polymerauswahl lässt sich somit die Freisetzung kontrolliert steuern.

Beispiel 6 (Einfluss der Wasseraufnahmekapazität des Thermoplasten auf die biologische Wirksamkeit):

a) Herstellung der Kern-Hülle-Partikel:

Der Mahlraum der Rotorkugelmühle wurde mit 50 g AEROSIL® 200, 50 g Kupfer-(I)-oxid und 7,5 kg Stahlkugeln mit einem Durchmesser von 4,8 mm und einer Dichte von 7550 kg/m$^3$ gefüllt. Nach dem Einfüllen wurde der Mahlraum mit Stickstoff überschichtet. Die Drehzahl des Rührwerks betrug 850 U/min. Der Mahlraum wurde doppelwandig mit Wasser gekühlt und die Mahldauer t betrug 2 min.

b) Herstellung und Zusammensetzung der thermoplastischen Formmasse:

Je 28 g der Kern-Hülle-Partikel aus Beispiel 5b wurden mit 42 g VESTAMID® NRG 3001 (Polyamid 12) bzw. 42 g Frialen®XS 10B (Polyethylen) bzw. 42 g Durethan®A 30S (Polyamid 66) im Labormischer HAAKE™ Rheomix OS von Thermo Scientific auf eine Zylindertemperatur von 240°C (Polyamid 12) bzw. 230°C (Polyethylen) bzw. 270°C (Polyamid 66) aufgeheizt und verknetet. Nach einer Verarbeitungszeit von t = 5 min wurde die Formmasse aus dem Kneter entfernt und anschließend durch Aufheizen auf 240°C (PA12) bzw. 230°C (PE) bzw. 270°C (PA66) zu Platten mit einer Dicke von 1 mm verpresst.

c) Bio-Coupon-Reaktor-Test (BCR-Test):

Um eine Aussage über die biologische Wirksamkeit, d.h. die bakterielle Anhaftung an ein Testsubstrat machen zu können, wurden die Proben aus Beispiel 6b mithilfe des Biofilm- Coupon-Reaktors evaluiert. Dabei wurden die zu testenden Oberflächen (Coupons mit 2,5 x 7,5 mm) in eine bakterienhaltige Suspension inkubiert.

- Herstellung der Vorkultur:

  Von einer Agarplatte wurde mit Hilfe einer Impföse eine Bakterienkultur des Stammes *Pseudoalteromonas atlantica* (DSM-No. 6840) in 50 mL Difco™ Marine Broth 2216 in einen Erlenmeyerkolben inokuliert und über Nacht (16-22h, Ende der logarithmischen Wachstumsphase) im Inkubationsschüttler mit 150 rpm, 50 mm Auslenkung, bei Raumtemperatur bebrütet.

- Herstellung der BCR-Hauptkultur:

  Nach der Inkubationszeit wurde 1/10.000 (v/v) der Vorkultur in das Medium M514 (1/5C) überimpft. Beispielsweise wurden 0,02 ml Vorkultur in ein 200 ml-Medium überimpft.

Das Medium M514(1/5C) entspricht dem Medium Difco™ Marine Broth 2216, wobei die Menge an Pepton und Bacto-Hefeextrakt im Medium auf 1/5 reduziert wurden. D.h., das Medium M514 (1/5 C) enthielt 1g/L Pepton und 0,2g/L Bacto-Hefeextrakt.

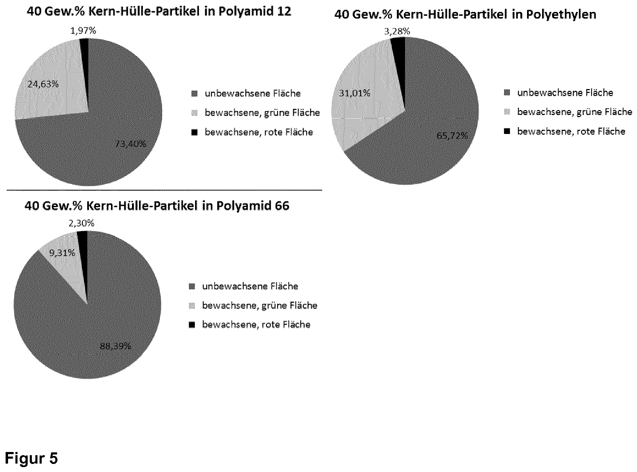

Durchgeführt wurde der Test in einem Biofilm-Coupon-Reaktor (BCR), der aus einem Glasgefäß, welches mittels eines Schraubdeckels verschlossen ist, bestand. An diesem war zudem ein Sterilfilter in der Mitte des Deckels angebracht, wodurch ein permanenter Gasaustausch gewährleistet war. Ein Teflon-Ring mit Nuten sorgte am Boden des Gefäßes für die Stabilität der sterilen Probencoupons. Diese wurden gemeinsam mit dem Magnetkernrührer zugegeben und mit 200 ml des inokulierten Testmediums versetzt. Der Reaktor wurde verschlossen und auf einem Magnetrührer bei 400 U/min 24 h lang inkubiert. Nach dem Ende der Inkubationszeit wurden die einzelnen Proben mit Wasser gewaschen und anschließend mit einem Fluoreszenzmarker (Film Tracer™ Live/Dead Biofilm Viability Kit, Invitrogen) eingefärbt, der es ermöglicht, zwischen lebenden (grün fluoreszierend) und toten (rot fluoreszierend) an der Oberfläche anhaftenden Bakterien zu unterscheiden. Die Ergebnisse sind in der Figur 5 gezeigt. So ist zu erkennen, dass bei vergleichbarer Oberflächenbelegung mit toten Bakterien große Unterschiede hinsichtlich der Oberflächenbelegung mit lebenden Bakterien bestehen. Während das Polyamid 66 die geringste Anhaftung zeigt, weist die Polyethylen-Probe die höchste Anhaftung mit lebenden Bakterien auf.

Diese Ergebnisse gehen mit der Annahme einher, dass bedingt durch eine höhere Wasseraufnahmekapazität des Polymers (Polyamid 66 > Polyamid 12 > Polyethylen) die Ausschwemmung der Kupferionen wesentlich erleichtert und somit deutlich schneller und in höheren Konzentrationen erfolgt.

**Patentansprüche**

1. Thermoplastische Zusammensetzung, die folgende Komponenten enthält:

   I. 40 bis 95 Gew.-% eines thermoplastischen Polymers, ausgewählt aus der Gruppe bestehend aus Polyamid, Polyolefin, Fluorpolymer und thermoplastischem Elastomer,
   II. 5 bis 60 Gew.-% Kern-Hülle-Partikel, deren Hülle wenigstens zu 98 Gew.-% aus partikulärem Siliciumdioxid mit einer Dicke von 0,2 bis 10 $\mu$m besteht und deren Kern wenigstens zu 98 Gew.-% aus wenigstens einem bewuchshemmenden Metalloxid besteht, welches in sphärischer und/oder sphäroider Form mit einem zahlenmittleren Partikeldurchmesser von 1 bis 20 $\mu$m vorliegt, sowie
   III. 0 bis 30 Gew.-% üblicherweise verwendete Zusatzstoffe,

   wobei sich die Prozentangaben auf die gesamte Zusammensetzung beziehen und in der Summe 100 ergeben.

2. Thermoplastische Zusammensetzung gemäß Anspruch 1, **dadurch gekennzeichnet, dass** das bewuchshemmende Metalloxid aus der Gruppe bestehend aus Kupferoxid, Titandioxid, Eisenoxid, Manganoxid, Vanadiumoxid, Zinnoxid und Zinkoxid ausgewählt ist.

3. Thermoplastische Zusammensetzung gemäß einem der Ansprüche 1 und 2, **dadurch gekennzeichnet, dass** der Hauptbestandteil des Kerns Kupfer-(I)-oxid ist.

4. Thermoplastische Zusammensetzung gemäß einem der Ansprüche 1 bis 3, **dadurch gekennzeichnet, dass** die Hülle hydrophile und/oder hydrophobierte Kieselsäurepartikel umfasst.

5. Thermoplastische Zusammensetzung gemäß einem der Ansprüche 1 bis 4, **dadurch gekennzeichnet, dass** die Kern-Hülle-Partikel 20 bis 80 Gew.-% bewuchshemmendes Metalloxid, bezogen auf die Kern-Hülle-Partikel, enthalten.

6. Thermoplastische Zusammensetzung gemäß einem der Ansprüche 1 bis 4, **dadurch gekennzeichnet, dass** die Kern-Hülle-Partikel 80 bis 90 Gew.-% bewuchshemmendes Metalloxid, bezogen auf die Kern-Hülle-Partikel, enthalten.

7. Thermoplastische Zusammensetzung gemäß einem der Ansprüche 1 bis 6, **dadurch gekennzeichnet, dass** das Verhältnis von mittlerer Dicke der Hülle zu mittlerem Kerndurchmesser der Kern-Hülle-Partikel 1:50 bis 1:2 ist.

8. Thermoplastische Zusammensetzung gemäß einem der Ansprüche 1 bis 7, **dadurch gekennzeichnet, dass** die BET-Oberfläche der Kern-Hülle-Partikel, bestimmt nach DIN 66131, 30 bis 150 m$^2$/g ist.

9. Thermoplastische Zusammensetzung gemäß einem der Ansprüche 1 bis 8, **dadurch gekennzeichnet, dass** die Stampfdichte der eingesetzten Kern-Hülle-Partikel, bestimmt nach DIN EN ISO 787/11, 400-1000 g/l ist.

10. Thermoplastische Zusammensetzung gemäß einem der Ansprüche 1 bis 9, **dadurch gekennzeichnet, dass** sie eine Formmasse oder ein Pulver ist.

11. Verfahren zur Herstellung eines Substrats, das mit der thermoplastischen Zusammensetzung gemäß einem der Ansprüche 1 bis 10 beschichtet ist, wobei das Verfahren folgende Schritte enthält:

a) Partikel, die wenigstens zu 98 Gew.-% aus Siliciumdioxid bestehen, und Partikel, die wenigstens zu 98 Gew.-% aus wenigstens einem bewuchshemmenden Metalloxid bestehen, welches in sphärischer und/oder sphäroider Form mit einem zahlenmittleren Partikeldurchmesser von 1 bis 20 μm vorliegt, werden unter einem spezifischen Energieeintrag von 200 bis 2000 kJ/kg in Kontakt gebracht;

b) gegebenenfalls werden im Anschluss an das Inkontaktbringen feinteiligere Partikel abgetrennt;

c) das erhaltene Produkt wird mit thermoplastischem Polymer und gegebenenfalls üblicherweise verwendeten Zusatzstoffen gemischt;

d) die erhaltene Mischung wird auf ein Substrat unter Bildung einer Beschichtung appliziert.

12. Substrat, das mit der thermoplastischen Zusammensetzung gemäß einem der Ansprüche 1 bis 10 beschichtet ist.

13. Formteil, hergestellt aus der thermoplastischen Zusammensetzung gemäß einem der Ansprüche 1 bis 10.

**Claims**

1. Thermoplastic composition which comprises the following components:

   I. 40 to 95 wt% of a thermoplastic polymer selected from the group consisting of polyamide, polyolefin, fluoropolymer and thermoplastic elastomer,

   II. 5 to 60 wt% of core-shell particles whose shell consists at least to an extent of 98 wt% of particulate silicon dioxide having a thickness of 0.2 to 10 μm and whose core consists at least to an extent of 98 wt% of at least one fouling-inhibiting metal oxide which is present in spherical and/or spheroidal form with a number-average particle diameter of 1 to 20 μm, and

   III. 0 to 30 wt% of additives typically used,

   where the percentages are based on the entire composition and add up to 100.

2. Thermoplastic composition according to Claim 1, **characterized in that** the fouling-inhibiting metal oxide is selected from the group consisting of copper oxide, titanium dioxide, iron oxide, manganese oxide, vanadium oxide, tin oxide and zinc oxide.

3. Thermoplastic composition according to either of Claims 1 and 2, **characterized in that** the principal constituent of the core is copper(I) oxide.

4. Thermoplastic composition according to any of Claims 1 to 3, **characterized in that** the shell comprises hydrophilic and/or hydrophobized silica particles.

5. Thermoplastic composition according to any of Claims 1 to 4, **characterized in that** the core-shell particles contain 20 to 80 wt% of fouling-inhibiting metal oxide, based on the core-shell particles.

6. Thermoplastic composition according to any of Claims 1 to 4, **characterized in that** the core-shell particles contain 80 to 90 wt% of fouling-inhibiting metal oxide, based on the core-shell particles.

7. Thermoplastic composition according to any of Claims 1 to 6, **characterized in that** the ratio of average thickness of the shell to average core diameter of the core-shell particles is 1:50 to 1:2.

8. Thermoplastic composition according to any of Claims 1 to 7, **characterized in that** the BET surface area of the core-shell particles, determined according to DIN 66131, is 30 to 150 $m^2$/g.

9. Thermoplastic composition according to any of Claims 1 to 8, **characterized in that** the apparent density of the core-shell particles used, determined according to DIN EN ISO 787/11, is 400-1000 g/l.

10. Thermoplastic composition according to any of Claims 1 to 9, **characterized in that** it is a moulding compound or a powder.

11. Method for producing a substrate coated with the thermoplastic composition according to any of Claims 1 to 10, the method comprising the following steps:

a) particles which consist at least to an extent of 98 wt% of silicon dioxide and particles which consist at least to an extent of 98 wt% of at least one fouling-inhibiting metal oxide which is present in spherical and/or spheroidal form with a number-average particle diameter of 1 to 20 $\mu$m are brought into contact at a specific energy input of 200 to 2000 kJ/kg;

b) relatively fine particles are optionally separated off following the contacting;

c) the product obtained is mixed with thermoplastic polymer and optionally with additives typically used;

d) the mixture obtained is applied to a substrate to form a coating.

**12.** Substrate coated with the thermoplastic composition according to any of Claims 1 to 10.

**13.** Shaped part produced from the thermoplastic composition according to any of Claims 1 to 10.

**Revendications**

**1.** Composition thermoplastique, qui contient les composants suivantes :

I. 40 à 95 % en poids d'un polymère thermoplastique, choisi dans le groupe constitué par un polyamide, une polyoléfine, un polymère fluoré et un élastomère thermoplastique,

II. 5 à 60 % en poids de particules noyau-enveloppe, dont l'enveloppe est constituée par au moins 98 % en poids de dioxyde de silicium particulaire d'une épaisseur de 0,2 à 10 $\mu$m et dont le noyau est constitué par au moins 98 % en poids d'au moins un oxyde métallique antisalissure, qui se présente sous forme sphérique et/ou sphéroïde avec un diamètre de particule moyen en nombre de 1 à 20 $\mu$m, et

III. 0 à 30 % en poids d'additifs généralement utilisés, les données de pourcentage se rapportant à la composition totale et leur somme étant de 100.

**2.** Composition thermoplastique selon la revendication 1, **caractérisée en ce que** l'oxyde métallique antisalissure est choisi dans le groupe constitué par l'oxyde de cuivre, le dioxyde de titane, l'oxyde de fer, l'oxyde de manganèse, l'oxyde de vanadium, l'oxyde d'étain et l'oxyde de zinc.

**3.** Composition thermoplastique selon l'une quelconque des revendications 1 et 2, **caractérisée en ce que** le constituant principal du noyau est l'oxyde de cuivre (I).

**4.** Composition thermoplastique selon l'une quelconque des revendications 1 à 3, **caractérisée en ce que** l'enveloppe comprend des particules de silice hydrophiles et/ou hydrophobées.

**5.** Composition thermoplastique selon l'une quelconque des revendications 1 à 4, **caractérisée en ce que** les particules noyau-enveloppe contiennent 20 à 80 % en poids d'oxyde métallique antisalissure, par rapport aux particules noyau-enveloppe.

**6.** Composition thermoplastique selon l'une quelconque des revendications 1 à 4, **caractérisée en ce que** les particules noyau-enveloppe contiennent 80 à 90 % en poids d'oxyde métallique antisalissure, par rapport aux particules noyau-enveloppe.

**7.** Composition thermoplastique selon l'une quelconque des revendications 1 à 6, **caractérisée en ce que** le rapport entre l'épaisseur moyenne de l'enveloppe et le diamètre moyen du noyau des particules noyau-enveloppe est de 1:50 à 1:2.

**8.** Composition thermoplastique selon l'une quelconque des revendications 1 à 7, **caractérisée en ce que** la surface BET des particules noyau-enveloppe, déterminée selon DIN 66131, est de 30 à 150 m$^2$/g.

**9.** Composition thermoplastique selon l'une quelconque des revendications 1 à 8, **caractérisée en ce que** la densité tassée des particules noyau-enveloppe utilisées, déterminée selon DIN EN ISO 787/11, est de 400 à 1 000 g/l.

**10.** Composition thermoplastique selon l'une quelconque des revendications 1 à 9, **caractérisée en ce qu'**il s'agit d'un matériau de moulage ou d'une poudre.

**11.** Procédé de fabrication d'un substrat, qui est revêtu avec la composition thermoplastique selon l'une quelconque des revendications 1 à 10, le procédé contenant les étapes suivantes :

a) des particules constituées d'au moins 98 % en poids de dioxyde de silicium et des particules constituées d'au moins 98 % en poids d'au moins un oxyde métallique antisalissure, qui se présente sous forme sphérique et/ou sphéroïde avec un diamètre de particule moyen en nombre de 1 à 20 $\mu$m, sont mises en contact avec un apport d'énergie spécifique de 200 à 2 000 kJ/kg ;
b) les particules plus fines sont éventuellement séparées après la mise en contact ;
c) le produit obtenu est mélangé avec un polymère thermoplastique et éventuellement des additifs généralement utilisés ;
d) le mélange obtenu est appliqué sur un substrat avec formation d'un revêtement.

12. Substrat, qui est revêtu avec la composition thermoplastique selon 1"une quelconque des revendications 1 à 10.

13. Pièce moulée, fabriquée à partir de la composition thermoplastique selon l'une quelconque des revendications 1 à 10.

**Figur 1**

**Figur 2**

**Figur 3**

Figur 4

**40 Gew.% Kern-Hülle-Partikel in Polyamid 12**

1,97%

24,63%

73,40%

- unbewachsene Fläche
- bewachsene, grüne Fläche
- bewachsene, rote Fläche

**40 Gew.% Kern-Hülle-Partikel in Polyethylen**

3,28%

31,01%

65,72%

- unbewachsene Fläche
- bewachsene, grüne Fläche
- bewachsene, rote Fläche

**40 Gew.% Kern-Hülle-Partikel in Polyamid 66**

2,30%

9,31%

88,39%

- unbewachsene Fläche
- bewachsene, grüne Fläche
- bewachsene, rote Fläche

**Figur 5**

**IN DER BESCHREIBUNG AUFGEFÜHRTE DOKUMENTE**

**In der Beschreibung aufgeführte Patentdokumente**

- US 20050048218 A1
- US 20090022899 A1
- WO 2008033364 A1
- US 2004197564 A1
- WO 2013036746 A1
- EP 2014060222 W
- DE OS3006961 A
- EP 0434244 A

- EP 0296852 A
- US 4480011 A
- WO 03093374 A
- US 5580659 A
- WO 0004106 A
- EP 1808468 A2
- WO 02094922 A
- EP 0346101 A2